# FASCICULE DE BREVET EUROPEEN

(11) **EP 2 510 341 B1**
(45) Date de publication et mention de la délivrance du brevet: **23.08.2017**
(21) Numéro de dépôt: 10805621.9
(22) Date de dépôt: 08.12.2010
(51) Int. Cl.: G01N 25/48, G01N 15/08

(54) **PROCÉDÉ ET INSTALLATION DE CARACTÉRISATION DE SURFACE DE MATÉRIAUX SOLIDES**
VERFAHREN UND AUSRÜSTUNG ZUR CHARAKTERISIERUNG DER OBERFLÄCHE VON FESTSTOFFMATERIALIEN
METHOD AND EQUIPMENT FOR CHARACTERIZING THE SURFACE OF SOLID MATERIALS

(30) Priorité: 08.12.2009 FR 0958756
(43) Date de publication de la demande: 17.10.2012
(73) Titulaire: Rhodia Operations, 93306 Aubervilliers (FR)
(72) Inventeur: PAVAGEAU, Bertrand, F-33140 Villenave D'ornon (FR); GUIRARDEL, Matthieu, F-33800 Bordeaux (FR); JOLLY, Julien, F-33400 Talence (FR)
(74) Mandataire: Lavoix
(86) Numéro de dépôt international: PCT/FR2010/052644
(87) Numéro de publication internationale: WO 2011/070296

(56) Documents cités:
- DE-A1- 10 308 741
- US-A- 4 519 718
- US-A1- 2004 042 528
- US-A1- 2007 092 974

## Description

La présente invention concerne un procédé et une installation de caractérisation de surface de matériaux solides.

L'invention s'intéresse en particulier, mais de manière non limitative, à la caractérisation de propriétés d'adsorption et de propriétés d'activité catalytique de matériaux pulvérulents utilisés dans diverses applications de traitement des gaz, par exemple à des fins de dépollution.

Caractériser de telles propriétés s'avère actuellement difficile. Si l'on prend l'exemple de la détermination de la surface spécifique d'un adsorbant, de nombreux procédés sont basés sur des mesures de quantités de gaz adsorbées et désorbées par un échantillon du matériau à caractériser, moyennant l'utilisation, souvent délicate, d'équipements spécifiques ad hoc.

Récemment, US-A-2007/0092974 et US-B-6 808 928 ont, quant à eux, proposé de caractériser les propriétés d'adsorption d'un matériau en mesurant les changements de température lorsque ce matériau est mis en contact avec un adsorbant gazeux : ces changements de température sont en effet liés aux phénomènes physiques d'adsorption et de désorption entre l'adsorbant et l'adsorbat.

Bien que cette idée soit séduisante, l'exploitation que propose le document précité reste à la fois fastidieuse et peu précise : ce document prévoit en effet de placer le matériau dans une chambre étanche, avant d'admettre dans cette chambre l'adsorbat gazeux qui s'écoule alors au contact du matériau, le cas échéant en le fluidisant au moins en partie, tandis que les flux thermiques provenant de ce matériau lors des phénomènes d'adsorption et de désorption sont observés à travers une fenêtre transparente.

Le but de la présente invention est de proposer un procédé et une installation qui soient plus faciles à mettre en oeuvre, tout en permettant d'obtenir des résultats fiables et précis.

A cet effet, l'invention a pour objet un procédé de caractérisation de surface de matériaux solides, tel que défini à la revendication 1.

L'invention a également pour objet une installation de caractérisation de surface de matériaux solides, telle que définie à la revendication 12.

L'idée à la base de l'invention est de chercher à réaliser un contact intime, donc efficace, entre des molécules sondes et les grains d'un matériau pulvérulent à caractériser, et ce dans des conditions favorisant la détection de phénomènes thermiques à la surface de ces grains, liés à l'interaction physique, chimique ou physico-chimique entre le matériau et la molécule sonde. Pour ce faire, on fait interagir le matériau et la molécule sonde par percolation, c'est-à-dire en faisant traverser le matériau pulvérulent par un écoulement gazeux contenant les molécules sondes : le mélange gazeux contenant ces molécules sondes s'écoule ainsi dans les espaces libres entre les grains du matériau en contact les uns avec les autres. En outre, à la différence d'un courant gazeux de fluidisation, le flux gazeux de percolation présente l'intérêt notable de, en quelque sorte, isoler thermiquement le matériau interagissant avec les molécules sondes, en raison de la faible conductivité thermique du mélange gazeux dans lequel les grains du matériau « baignent ». Cette isolation thermique, par le mélange gazeux de percolation, des interactions entre le matériau et les molécules sondes rend facilement et efficacement détectables les phénomènes thermiques de surface résultant de l'interaction précitée. L'exploitation de ces « réponses thermiques », notamment par thermographie infrarouge, permet de déduire, typiquement par des calculs appropriés, des caractéristiques de surface relatives au matériau, avec une précision et une fiabilité remarquable. Des exemples en ce sens sont fournis par la suite.

On souligne ici que, au sens de l'invention, la notion de « matériau pulvérulent » ne renvoie pas à une classification stricte préexistante relative à des poudres. Au contraire, l'invention s'applique de manière générale à des matériaux présentant une structure solide finement divisée ou poreuse, permettant le traitement par percolation gazeuse de leurs grains en contact les uns avec les autres.

En pratique, l'invention est particulièrement facile à mettre en oeuvre. En particulier, elle ne nécessite pas de confiner le matériau à caractériser de manière étanche et les mesures des réponses thermiques sont réalisées par observations directes du matériau en cours de percolation gazeuse. On comprend donc que les temps de manipulation correspondants sont courts et peuvent s'enchaîner rapidement : on peut parler, en quelque sorte, de caractérisation de surface « à haut-débit ». La mise en oeuvre de l'invention s'avère donc économique, d'autant plus que de faibles quantités des matériaux à caractériser et des mélanges gazeux utilisés sont suffisantes pour disposer de données fiables et significatives, eu égard à la précision des réponses thermiques obtenues et à la performance des mesures relatives à ces réponses thermiques. Typiquement, la masse du matériau ainsi caractérisé est inférieure à 100 mg.

Comme présenté plus en détail par la suite, l'invention s'applique à divers couples matériau/molécule sonde : il est ainsi envisagé des couples adsorbant/adsorbat, oxydant/réducteur, acide/base et base/acide. Ainsi, selon les cas, la caractéristique de surface déduite concerne, entre autres, les propriétés d'adsorption physique ou l'activité catalytique par oxydoréduction du matériau à caractériser.

Par ailleurs, selon les applications envisagées, l'effet de paramètres opératoires additionnels peut être pris en compte par l'invention. C'est notamment le cas de la température du matériau, moyennant une thermorégulation appropriée, comme évoqué plus en détail par la suite.

Des caractéristiques additionnelles avantageuses du procédé et de l'installation conformes à l'invention, prises isolément ou selon toutes les combinaisons techniquement possibles sont spécifiées aux revendications dépendantes 2 à 11 et 13 à 15.

L'invention sera mieux comprise à la lecture de la description qui va suivre, donnée à titre d'illustration non limitative et faite en se référant aux dessins sur lesquels :
- la figure 1 est un schéma d'une installation conforme à l'invention ;
- la figure 2 est un graphe illustrant la variation, en fonction du temps, de mesures de température d'un matériau, réalisées dans le cadre d'un premier exemple de l'invention ;
- la figure 3 est un graphe illustrant la corrélation entre une partie des mesures de la figure 2 et une valeur préétablie de la surface spécifique du matériau, et ce pour plusieurs formes de ce matériau, qui présentent des valeurs respectives différentes pour leur surface spécifique ;
- les figures 4 et 5 sont des graphes analogues à celui de la figure 2, concernant respectivement des deuxième et troisième exemples de l'invention ; et
- la figure 6 est un graphe illustrant la variation, en fonction d'une température, d'une différentielle temporelle de température pour quatre matériaux caractérisés dans le cadre d'un quatrième exemple de l'invention.

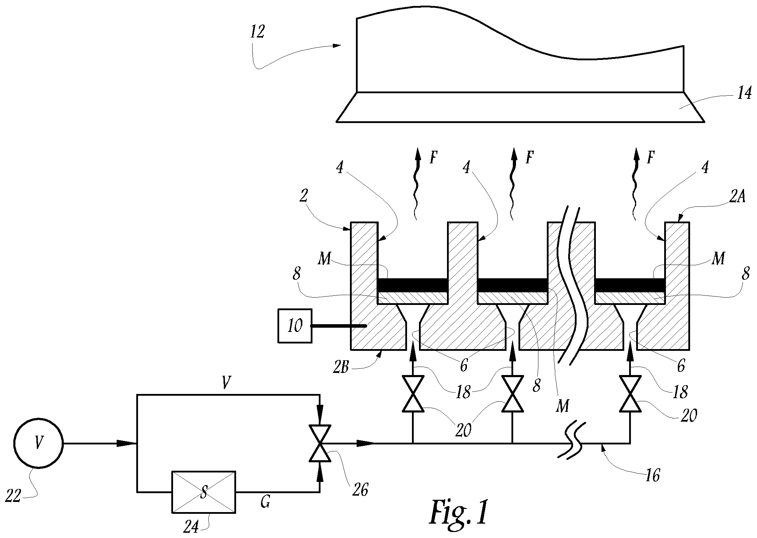

L'installation conforme à l'invention, illustrée schématiquement sur la figure 1, comprend un bloc 2 dans lequel sont délimités plusieurs puits 4 distincts les uns des autres. Les puits 4 sont, à une de leurs extrémités, librement ouverts sur l'extérieur, en débouchant sur une face 2A du bloc 2. A leur extrémité opposée, chaque puits 4 est fermé par un fond relié à la face opposée 2B du bloc 2 par un conduit 6 délimité dans le bloc.

Chaque puits 4 est adapté pour recevoir intérieurement un matériau à caractériser M. En pratique, ce matériau M est fourni sous forme d'une poudre déposée sur le fond du puits 4, avec interposition d'un élément fritté de support 8 s'étendant en travers du débouché du conduit 6 dans le puits 4.

Les éléments frittés 8 présentent une porosité choisie pour, d'une part, que l'élément supporte mécaniquement le matériau pulvérulent M sans que ce dernier ne s'insinue dans les pores de l'élément fritté et, d'autre part, que l'élément fritté ne soit pas étanche au gaz, c'est-à-dire que cet élément fritté puisse être traversé de part en part par un flux gazeux. Typiquement, les pores des éléments frittés 8 présentent une taille de l'ordre du micromètre.

Avantageusement, le bloc 2 est thermostaté, c'est-à-dire que sa température de fonctionnement peut être imposée à une valeur réglable, moyennant un thermostat référencé 10 sur la figure 1. Cette thermorégulation peut aussi bien s'appliquer sur l'ensemble du bloc 2, dans le sens où tous les puits 4 présentent alors une température de service commune, que s'appliquer individuellement à chaque puits. En pratique, les moyens de thermorégulation correspondants, non représentés sur la figure 1, peuvent prendre des formes diverses : ainsi, des cartouches chauffantes électriques ou un circuit de circulation d'un fluide caloporteur peuvent être intégrés dans l'épaisseur du bloc 2.

On comprend que le matériau constituant le bloc 2 est choisi, entre autres, en fonction des souhaits de thermorégulation pour les différents puits 4. Dans l'exemple illustré, ce bloc 2 se présente sous la forme d'un seul tenant, réalisé en acier inoxydable : dans ce cas, la plage de température régulée peut être comprise entre 25 et 550°C. Dans le cas où cette température atteint 1200°C, de la céramique est utilisable, le bloc 2 pouvant alors s'apparenter à un four de calcination.

L'installation conforme à l'invention comprend également une caméra infrarouge 12 dont l'objectif 14 est disposé en regard de la face 2A du bloc 2. Cette caméra peut tout aussi bien être positionnée de manière que son axe optique soit perpendiculaire à la face 2A du bloc : dans ce cas, la mesure de thermographie est assurée à l'aide d'un miroir positionné à 45° au-dessus de la face 2A, permettant de réfléchir le rayonnement thermique en direction de la caméra. Cette configuration permet de protéger la caméra dans le cas de dégagements gazeux corrosifs ou tout autre flux agressif pouvant porter atteinte à l'intégrité de la caméra thermique.

La caméra 12 est adaptée pour détecter des radiations dans le domaine de l'infrarouge, correspondant typiquement aux domaines spectrales compris entre 7,5 et 13 µm, et de produire des images de cette radiation. En service, ces images sont envoyées à des moyens de traitement informatiques, non représentés, à même de déterminer une valeur représentative de la température de l'objet émettant la radiation détectée par la caméra 12. Plus précisément, disposer d'une valeur de température absolue à l'aide de la caméra 12 nécessite que l'émissivité de l'objet observé soit connue ou mesurée au préalable par un étalonnage radiatif adapté. En pratique, la connaissance de la valeur de la température absolue n'est pas nécessaire si les données mesurées sont traitées par comparaison entre elles, comme expliqué en détail plus loin. Dans le même esprit, on peut aussi utiliser le signal de la caméra en niveaux de gris.

A titre d'exemple, la caméra 12 est une caméra commercialisée par la société FLIR Systems, sous la référence « ThermoVision A20M », dont les signaux de sortie sont traités par le logiciel « ThermaCAM Researcher » (marque déposée).

Comme représenté sur la figure 1, l'installation selon l'invention comprend en outre un circuit 16 d'alimentation gazeuse des conduits 6. Plus précisément, ce circuit 16 inclut des arrivées gazeuses 18 qui alimentent respectivement les conduits 6, de manière à déboucher respectivement dans les fonds des différents puits 4. Chaque arrivée 18 est munie d'une électrovanne 20 ou d'un moyen similaire, à même de commander le débit de gaz circulant dans l'arrivée correspondante 18. En amont de leur électrovanne 20, les arrivées 18 sont alimentées par un mélange gazeux G contenant, avec une certaine concentration, une molécule sonde S.

En pratique, le mélange gazeux G est mis à disposition de diverses manières. Une première solution consiste à disposer d'une source de ce mélange, directement raccordable en entrée du circuit 16. Une autre solution, représentée sur la figure 1, consiste à produire le mélange gazeux G à partir d'une source 22 d'un gaz vecteur V, alimentant une unité 24 de production de molécules sondes S. Avantageusement, le circuit 16 permet, en alternance du mélange gazeux G, d'alimenter les arrivées 18 par un gaz dépourvu de molécules sondes S. Dans l'exemple représenté, la source 22 de gaz vecteur V peut être utilisée à cette fin, moyennant l'utilisation d'une vanne multivoies 26, placée en amont des électrovannes 20 et alimentée, d'une part, par le mélange gazeux provenant de l'unité 24 et, d'autre part, directement par la source 22.

Avant de décrire des exemples spécifiques d'utilisation de l'installation de la figure 1, son fonctionnement générique est décrit ci-après.

Moyennant la commande appropriée d'une des électrovannes 20, l'arrivée correspondante 18 alimente le fond du puits 4 associé en mélange gazeux G. Après avoir traversé de part en part l'élément fritté 8, ce mélange gazeux atteint le matériau pulvérulent M et progresse dans l'épaisseur de ce dernier, en s'écoulant dans les espace libres entre les grains de ce matériau, jusqu'à traverser en totalité le matériau. Autrement dit, on réalise, à l'intérieur du puits 4, une percolation gazeuse du matériau pulvérulent M. Les molécules sondes S contenues dans le mélange gazeux, interagissent alors avec les grains du matériau M : cette interaction peut, selon les cas, être de nature physique, chimique ou physicochimique. Dans tous les cas, on s'intéresse aux phénomènes thermiques liés à cette interaction. Autrement dit, selon que cette interaction soit exothermique ou endothermique, les grains du matériau pulvérulent M émettent conjointement, depuis leur surface, un flux thermique radiatif, comme indiqué par la flèche F sur la figure 1.

Ce flux thermique F est détecté par la caméra 12 et ainsi exploité par les moyens de traitement informatiques reliés à cette caméra, afin de déterminer une valeur représentative de la température de surface du matériau M résultant de son interaction avec la molécule sonde S : dans ce contexte, le flux thermique F présente une qualité remarquable, liée, d'une part, au contact intime de percolation entre les grains du matériau et le mélange gazeux G contenant les molécules sondes et, d'autre part, à l'isolation thermique de l'interaction entre le matériau et les molécules sondes, par la phase gazeuse de percolation dans laquelle le matériau M est « immergé ».

En pratique, la quantité du matériau M présente dans le puits 4 est faible : elle est typiquement inférieure à 100 mg. De plus, on comprend que le débit du mélange gazeux G dans l'arrivée 18 est choisi suffisamment faible pour obtenir l'effet de percolation recherché, notamment en évitant que ce mélange gazeux puisse soulever ou déplacer les grains du matériau M qui reposent dans le fond du puits et qui restent en permanence en contact les uns avec les autres: le débit gazeux de l'arrivée 18 est typiquement inférieur à 100 ml/min, voire compris entre 10 et 70 ml/min. Avantageusement, l'élément fritté 8 participe à homogénéiser l'écoulement du flux de mélange gazeux G juste avant qu'il atteigne et traverse le matériau M. En effet, en raison des faibles dimensions du puits 4, en particulier du conduit 6 dont le diamètre est de l'ordre du millimètre, l'écoulement du mélange gazeux G est en régime laminaire et se trouve focalisé au débouché du conduit 6 dans le puits 4 : l'élément fritté 8 permet de créer des turbulences dans le flux du mélange gazeux et permet aussi un étalement de celui-ci sur le côté du matériau M tourné vers cet élément fritté. Autrement dit, l'élément fritté 8 « brise » le flux du mélange gazeux G qui entre dans le puits 4, en homogénéisant ce flux sur tout le diamètre du puits au niveau du matériau M.

Ce qui vient d'être décrit pour l'un des puits 4 peut être réalisé pour tous les puits 4, soit concomitamment pour au moins certains d'entre eux, comme pour les exemples 1, 2 et 4 détaillés plus loin, soit séquentiellement pour au moins certains d'entre eux, comme pour l'exemple 3 ci-après. Bien entendu, la caméra 12 présente une résolution spatiale suffisante pour distinguer les flux thermiques respectifs F provenant des différents puits 4, de manière à exploiter isolément les données correspondant à chacun de ces flux F.

Avantageusement, lors de l'utilisation de l'installation de la figure 1, les puits 4 sont associés par paires de manière que, à l'un des puits 4 dans lequel le mélange gazeux G est admis, on associe un autre puits 4 dont l'admission en mélange gazeux est obturée, moyennant une commande correspondante des électrovannes 20 en lien avec les deux puits de la paire ainsi définie. De cette façon, à condition que les deux puits 4 de cette paire contiennent la même quantité du même matériau pulvérulent M, la différence entre la mesure thermique pour le matériau M contenu dans l'un de ces deux puits et la mesure thermique pour le matériau M de l'autre puits peut être calculée pour disposer d'une donnée thermique non influencée par l'émissivité de l'installation et/ou par des fluctuations thermiques de l'environnement extérieur. Autrement dit, le puits 4 de la paire précitée, dans lequel le matériau M n'est pas traversé par le mélange G, sert de référence de comparaison pour la mesure thermique relative à l'autre puits de cette paire. De telles paires de puits 4 sont utilisées dans les exemples 1, 2 et 4 ci-après.

Le cas échéant, la régulation thermique du bloc 2 est active pendant l'utilisation de l'installation : pendant que le mélange gazeux G s'écoule de manière percolée à travers le matériau M, la température d'ensemble de ce matériau est imposée à une valeur réglée par le thermostat 10, étant entendu que les phénomènes thermiques de surface, résultant de l'interaction entre le matériau M et la molécule sonde S, se superposent à la température d'ensemble du matériau ainsi régulé. En pratique, cette régulation thermique peut, dans le temps, être statique, comme dans l'exemple 1 ci-après, ou dynamique, et ce soit par rampe, comme dans les exemples 2 et 4 ci-après, soit par paliers successifs, comme dans l'exemple 3 ci-après.

Bien entendu, l'installation selon l'invention est avantageusement pilotée par une interface de commande, telle qu'une interface « Labview ». Cette interface de commande contrôle le circuit 16, en particulier les électrovannes 20 et, le cas échéant, l'unité 24 de production des molécules sondes S et le thermostat 10.

Le procédé et l'installation selon l'invention peuvent être appliqués à divers couples matériau M/molécule sonde S selon la caractérisation de surface que l'on cherche à obtenir, notamment selon que cette caractérisation concerne les propriétés d'adsorption physique du matériau, l'activité catalytique par oxydoréduction du matériau, ou bien les fonctions acide ou basique du matériau.

Une liste préférentielle de matériaux M inorganiques est la suivante : alumine, silice, zéolite, minéraux alumino-silicatés, oxydes de terre rare (cérium, lanthane, praésodyme, zirconium, etc., seuls ou en mélange) et l'un des matériaux précités chargés par au moins un métal noble choisi parmi l'or, le platine, le palladium, etc.

Le matériau M peut aussi être organique, tant qu'il présente les caractéristiques de morphologie qui conviennent pour l'invention (solide finement divisé et/ou d'une grande porosité) : il consiste alors notamment en des polymères (polyamines, polyphosphazènes, dérivés phosphorés) ou bien des molécules organiques de faible masse molaire.

Dans le même esprit, il est possible de caractériser des matériaux hybrides, c'est-à-dire possédant à la fois des fonctions chimiques inorganique et organique.

Dans le cas de la caractérisation de propriétés d'adsorption physique du matériau M, notamment choisi parmi la liste ci-dessus, les mesures par la caméra 12 permettent de déduire, entre autres, la capacité du matériau M à adsorber la molécule sonde S, comme dans l'exemple 2 ci-après, ainsi qu'une valeur de surface spécifique pour le matériau M, comme dans l'exemple 1 ci-après.

Dans le cas de la caractérisation de l'activité catalytique par oxydoréduction du matériau M, notamment lorsque ce dernier est choisi parmi la liste définie plus haut, les mesures par la caméra 12 permettent de déduire, entre autres, la température d'ignition de la molécule sonde S en présence de ce matériau, comme dans l'exemple 3 ci-après, ainsi qu'un profil thermique de la réductibilité du matériau M, comme dans l'exemple 4 ci-après.

Selon la caractérisation de surface que l'on cherche à établir, la molécule sonde S est préférentiellement choisie parmi des hydrocarbures, des suies, des composés organiques volatiles, en particulier l'isopropanol, du monoxyde de carbone, du dioxyde de carbone, des acides carboxyliques, des alcanes, des alcynes, des alcènes, des alcools, des composés aromatiques, des thiols, des esters, des cétones, des aldéhydes, des amides, des amines, du N-propylamine, notamment l'isopropylamine, de l'ammoniaque, de la lutidine, de la pyridine, de l'hydrogène, du fluor, du néon, du nitrile, de la quinoléine, et un mélange d'au moins certains d'entre eux.

Dans tous les cas de caractérisation de surface, l'invention permet avantageusement de mettre en oeuvre une même famille de molécules sondes S, par exemple différents alcools, tout en jouant sur la longueur de la chaine hydrocarbonée des alcools : on peut alors caractériser l'impact de l'encombrement stérique des molécules sondes, selon que ces molécules sondes atteignent ou non certains sites de surface du matériau M, et ainsi déterminer une microporosité de ce matériau.

Par ailleurs, dans tous les cas de caractérisation de surface, une liste préférentielle de gaz vecteurs V est la suivante : l'air, l'azote, l'oxygène, l'argon, l'hélium et un mélange d'au moins certains de ceux-ci.

Quatre exemples de mise en oeuvre de l'invention, notamment en utilisant l'installation de la figure 1, vont maintenant être décrits.

### Exemple 1 :

Cet exemple concerne la caractérisation de surface d'oxyde de cérium (CeO₂), en ce qui concerne ses propriétés d'adsorption physique.

On dispose de cinq oxydes de cérium ayant une granulométrie identique, par exemple 300 µm, mais des microporosités différentes de sorte qu'ils présentent des valeurs respectives différentes pour leur surface spécifique, ces valeurs étant connues à l'avance à des fins de vérification de la performance de l'invention.

Pour chacun de ces oxydes de cérium, on dispose de quatre-vingt milligrammes de poudre, répartis par moitié dans deux puits 4 du bloc 2.

Les molécules sondes S utilisées sont des molécules d'isopropanol. A titre d'exemple, le mélange gazeux G est obtenu, au niveau de l'unité 24, en faisant barboter de l'azote provenant de la source 22, dans une solution liquide d'isopropanol. La quantité d'isopropanol vaporisée dans l'unité 24 est régulée par la température de cette unité. A titre d'exemple, la concentration molaire d'isopropanol dans le mélange gazeux G utilisé est de 8,73%. Le débit gazeux à travers les arrivées 18 vaut 60 ml/min.

Le bloc 2 est thermorégulé à une valeur de température fixe qui, en pratique, peut être la température ambiante, ce qui revient à dire que le thermostat 10 est inactivé.

Pour chacune des cinq paires de puits 4 contenant les oxydes de cérium ayant des surfaces spécifiques différentes, on alimente l'un des deux puits en azote contenant des molécules d'isopropanol, tandis que l'électrovanne 20 de l'autre puits est fermée.

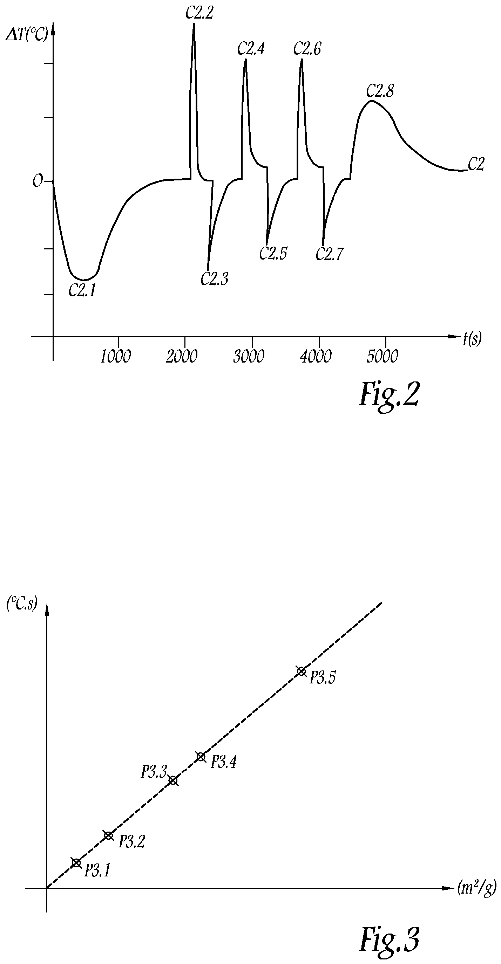

A l'aide de la caméra 12, on mesure les flux thermiques radiatifs F émis par les puits 4 de chaque paire. La figure 2 montre une courbe C2 correspondant à l'évolution de la différence (ΔT) des mesures thermiques respectives pour les deux puits d'une des cinq paires précitées, en fonction du temps (t), cette évolution étant liée à des cycles d'adsorption et de désorption de l'oxyde de cérium :
- pendant les 2000 premières secondes, les puits 4 est alimenté en azote pur afin de « nettoyer » l'oxyde de cérium, notamment en désorbant des molécules d'eau préalablement présentes, ce qui explique le refroidissement référencé C2.1 sur la figure 2;
- puis, pendant environ 200 secondes, on fait circuler le mélange G azote et molécules d'isopropanol à travers l'oxyde de cérium ; des molécules d'isopropanol sont alors adsorbées à la surface des grains de ce matériau et un phénomène exothermique est observé, comme montré par le pic référencé C2.2 sur la figure 2 ;
- puis, pendant environ 800 secondes, on interrompt la circulation du mélange contenant l'isopropanol, au profit d'une alimentation gazeuse des puits 4 exclusivement en azote ; on observe la désorption des molécules d'isopropanol préalablement adsorbées, représentée par un pic de refroidissement C2.3 ;
- puis on recommence, à deux reprises, le cycle d'adsorption puis de désorption qui vient d'être décrit, en observant ainsi successivement un pic exothermique C2.4 et un pic endothermique C2.5, puis de nouveau un pic exothermique C2.6 et un pic endothermique C2.7 ; et
- enfin, dans un dernier temps, l'admission de gaz est totalement interrompue dans les puits 4 ; on observe cependant un échauffement C2.8 qui s'explique par l'adsorption de molécules d'eau présentes dans l'environnement ambiant.

La figure 2 montre ainsi que le procédé et l'installation selon l'invention détectent avec une grande précision les variations de température de surface du matériau M liées à l'adsorption/désorption de l'isopropanol.

Pour montrer la performance de l'invention, on a reporté sur la figure 3 cinq points P3.1 à P3.5: les abscisses respectives de ces cinq points correspondent aux valeurs respectives de la surface spécifique pour les cinq oxydes de cérium utilisés, tandis que les ordonnées respectives de ces cinq points correspondent à l'air mesuré du pic exothermique C2.6 propre à chaque oxyde de cérium utilisé.

Eu égard à l'alignement quasi-parfait des points P3.1 à P3.5, on conclut à une corrélation manifeste entre la quantification préétablie de la surface spécifique des matériaux utilisés et les données acquises par le procédé et l'installation selon l'invention.

### Exemple 2 :

L'exemple 2 s'intéresse à la caractérisation de surface d'oxydes de terre rare, en ce qui concerne leurs propriétés d'adsorption physique.

Les matériaux utilisés sont deux formes différentes d'oxyde de cérium (CeO₂) et un oxyde mixte de silicium et de zirconium (ZrO₂SiO₂ La molécule sonde S utilisée est du dioxyde de carbone, fourni par une source ad hoc.

Une même quantité d'oxyde de terre rare, de l'ordre de quelques dizaines de milligrammes, est placée dans les puits 4 : deux puits, associés en une paire, reçoivent la première forme d'oxyde de cérium, deux autres puits reçoivent la seconde forme d'oxyde de cérium, et deux autres puits reçoivent l'oxyde mixte de silicium et de zirconium.

Pour chaque paire de puits 4 ainsi définie, du dioxyde de carbone est envoyé à travers le fond de l'un des puits, tandis que l'autre puits n'est pas balayé par le gaz.

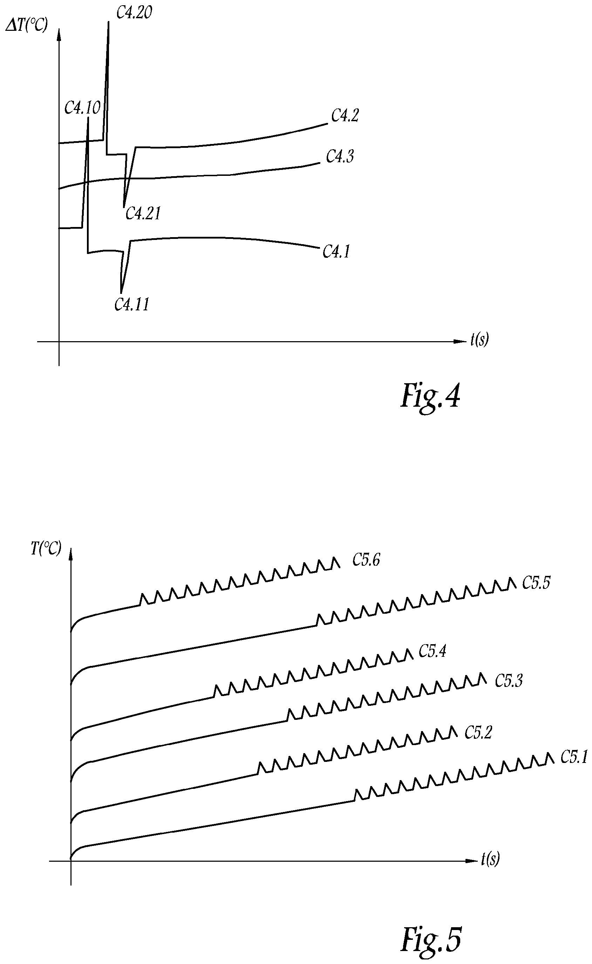

La figure 4 montre trois courbes respectivement associées aux trois matériaux utilisés, à savoir des courbes C4.1 et C4.2 respectivement associées aux deux formes d'oxyde de cérium et une courbe C4.3 associée à l'oxyde de silicium et de zirconium. Chaque courbe C4.1, C4.2, C4.3 correspond à l'évolution, en fonction du temps, de la différence (ΔT) entre la température mesurée pour le puits de la paire associée au matériau correspondant, alimenté en dioxyde de carbone, et la température mesurée pour l'autre puits de cette paire. On constate que les courbes C4.1 et C4.2 présentent chacune un pic exothermique C4.10, C4.20. Ces pics exothermiques C4.10 et C4.20 interviennent à des instants successifs et sont chacun suivi par un pic endothermique C4.11, C4.21.

Cette observation s'explique par les conditions de température dans lesquelles les mesures se sont déroulées : en effet, la température du bloc 2 est régulée, de manière à suivre une rampe d'augmentation, linéaire dans le temps, de sorte que cette température passe progressivement de 150°C à 250°C. Ainsi, eu égard à la présence des pics exothermiques C4.10 et C4.20, on peut conclure que les deux formes d'oxyde de cérium adsorbent le dioxyde de carbone à des températures d'ensemble respectives différentes, puis, à une température un peu plus élevée, ils désorbent les molécules de dioxyde de carbone préalablement adsorbées.

En revanche, l'oxyde mixte de silicium et de zirconium ne présente pas la capacité d'adsorber le dioxyde de carbone, quelque soit sa température d'ensemble parmi la plage testée.

### Exemple 3 :

Cet exemple concerne la caractérisation de surface de différents oxydes de terre rare, en ce qui concerne leur capacité d'oxydation de l'isopropanol.

La figure 5 montre six courbes C5.1 à C5.6. Chaque courbe correspond à l'évolution de la température (T) de chaque oxyde de terre rare, mesurée par la caméra 12, en fonction du temps (t). Les courbes C5.1 à C5.6 sont ainsi respectivement associées à une première forme d'oxyde de cérium (CeO₂), à trois formes différentes d'oxyde mixte de cérium, zirconium et lanthane (CeZrLa), et à deux autres formes d'oxyde de cérium (CeO₂).

Dans l'exemple considéré, le mélange gazeux a, comme gaz vecteur, l'air et la concentration d'isopropanol est de 8,7%.

Les courbes C5.1 à C5.6 sont obtenues alors que la température d'ensemble des oxydes utilisés évolue : cette température d'ensemble passe de 120 à 300°C, par palier incrémental de 5°. A chaque palier de température, une fois que la valeur de cette dernière s'est stabilisée, le mélange gazeux contenant des molécules d'isopropanol est admis, de manière séquentielle, dans chacun des puits 4 contenant respectivement les six oxydes utilisés : ce mélange gazeux s'écoule ainsi quelques secondes dans un premier puits 4, puis s'interrompt au profit d'un autre puits 4, et ainsi de suite.

De cette façon, on peut déduire une valeur de la température d'ignition de l'isopropanol par les oxydes testés, c'est-à-dire la température à laquelle commence l'oxydation catalytique de l'isopropanol par ces matériaux. En effet, cette oxydation catalytique est une réaction exothermique qui, sur la figure 5, se traduit par des pics exothermiques : pour chacune des courbes C5.1 à C5.6, on peut déterminer la température à laquelle apparaissent les pics exothermiques précités.

### Exemple 4 :

Cet exemple concerne la caractérisation de surface d'oxydes de terre rare, chargés par de l'or pour l'un d'entre eux, en ce qui concerne leur réductibilité.

Le mélange gazeux utilisé ici consiste en de l'azote contenant des molécules sondes d'isopropanol.

Chaque matériau caractérisé est placé, avec une quantité de 20 mg, dans deux puits 4 : l'un de ces puits est alimenté, continûment dans le temps, par le mélange gazeux précité, tandis que ce mélange gazeux ne traverse pas l'autre puits afin que ce dernier constitue une référence de comparaison pour le premier puits.

Par ailleurs, la température du bloc 2 est régulée de manière à suivre une rampe croissante, linéaire dans le temps, par exemple de 3°C/minute, la température d'ensemble des matériaux caractérisés passant ainsi de 120°C à 500°C.

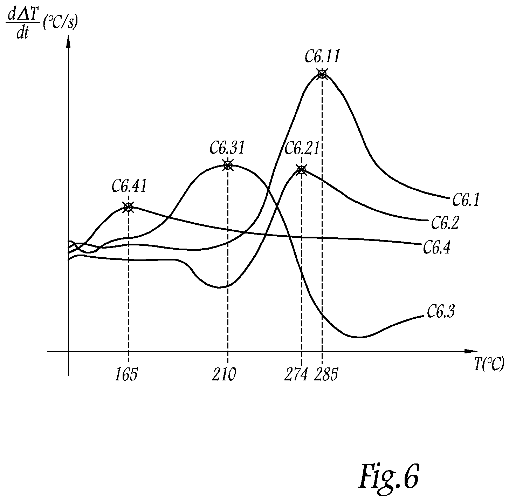

Pour chaque matériau caractérisé, on mesure, à l'aide de la caméra 12, les réponses thermiques respectives du puis 4 alimenté en mélange gazeux et du puits de référence non alimenté en gaz. On peut alors représenter la différentielle temporelle (dΔT) de la différence entre les deux mesures thermiques précitées, en fonction de la température du puits de référence, qui est directement liée à la température de consigne du thermostat 10 du bloc 2. Les quatre courbes, respectivement associées aux quatre matériaux à caractériser, sont montrés sur la figure 6.

Chaque courbe C6.1, C6.2, C6.3, C6.4 est représentative des atomes d'oxygène que le matériau caractérisé a la capacité de libérer, en fonction de sa température d'ensemble. Autrement dit, ces courbes correspondent à des profils thermiques de la réductibilité des matériaux utilisés.

Ainsi, chacune des courbes précitées présente un sommet, respectivement référencé C6.11, C6.21, C6.31, C6.41 dont la température correspond à la température à laquelle le matériau correspondant est à même de libérer le plus d'atomes d'oxygène pour oxyder les molécules sondes d'isopropanol :
- deux formes d'oxyde mixte de cérium, zirconium et lanthane (CeZrLa), respectivement associées aux courbes C6.1 et C6.2, libèrent un maximum d'atomes d'oxygène pour oxyder l'isopropanol à environ 285 et 274°C,
- l'oxyde de cérium (CeO₂), qui est associé à la courbe C6.3, libère un maximum d'atomes d'oxygène à 210°C environ, et
- lorsque cet oxyde de cérium est chargé par de l'or (Au/CeO₂), un maximum d'atomes d'oxygène est accessible dès 165°C, comme cela ressort de la courbe C6.4.

## Revendications

1. Procédé de caractérisation de surface de matériaux solides, dans lequel :
- on dispose, d'une part, d'un matériau à caractériser (M), sous forme pulvérulente, et, d'autre part, d'un mélange gazeux (G) contenant une molécule sonde (S) susceptible d'interagir avec le matériau,
- on réalise une percolation gazeuse du matériau (M) en faisant s'écouler le mélange gazeux (G) dans les espaces libres entre les grains du matériau, tout en laissant ces grains en contact les uns avec les autres,
- pendant qu'on réalise cette percolation gazeuse à travers le matériau (M), on mesure un flux thermique radiatif (F) émis par le matériau, et
- à partir des mesures relatives au flux thermique radiatif (F), on déduit au moins une caractéristique de surface relative au matériau (M).

2. Procédé suivant la revendication 1, **caractérisé en ce qu'**on mesure le flux thermique radiatif (F) par thermographie infrarouge.

3. Procédé suivant l'une des revendications 1 ou 2, **caractérisé en ce qu'**on régule la température du matériau (M) pendant l'écoulement du mélange gazeux (G) à travers le matériau (M).

4. Procédé suivant la revendication 3, **caractérisé en ce que**, pendant l'écoulement du mélange gazeux (G) à travers le matériau (M), soit la température de ce matériau est fixée à une valeur préréglée, soit on fait varier la valeur de la température du matériau, en particulier de façon linéaire dans le temps.

5. Procédé suivant l'une quelconque des revendications précédentes, **caractérisé en ce que**, pour déduire la ou les caractéristiques de surface relatives au matériau (M), on compare les mesures relatives au flux thermique radiatif (F) du matériau (M) à travers lequel s'écoule le mélange gazeux (G), à des mesures de référence obtenues en mesurant un flux thermique radiatif émis par le même matériau sans que ce dernier ne soit traversé par le mélange gazeux.

6. Procédé suivant l'une quelconque des revendications précédentes, **caractérisé en ce que** le matériau à caractériser (M) est choisi parmi de l'alumine, de la silice, de la zéolite, des minéraux alumino-silicatés, des oxydes de terre rare, notamment des oxydes de cérium, de lanthane, de praséodyme et/ou de zirconium, de l'un des matériaux précités chargés par au moins un métal noble, notamment par de l'or, par du platine et/ou par du palladium, des polymères, notamment des polyamines, des polyphosphozènes et des dérivés phosphorés, des molécules organiques, et un mélange d'au moins certains de ceux-ci.

7. Procédé suivant l'une quelconque des revendications précédentes, **caractérisé en ce qu'**on choisit, en tant que couple matériau (M)/molécule sonde (S), un couple adsorbant/adsorbat, la caractéristique de surface déduite correspondant notamment à la capacité du matériau (M) à adsorber physiquement la molécule sonde (S) ou à une valeur de surface spécifique relative au matériau (M).

8. Procédé suivant l'une quelconque des revendications 1 à 6, **caractérisé en ce qu'**on choisit, en tant que couple matériau (M)/molécule sonde (S), un couple oxydant/réducteur, la caractéristique de surface déduite consistant notamment en un profil thermique (C6.1 à C6.4) de la réductibilité du matériau (M).

9. Procédé suivant l'une quelconque des revendications 1 à 6, **caractérisé en ce qu'**on choisit, en tant que couple matériau (M)/molécule sonde (S), un couple acide/base ou un couple base/acide.

10. Procédé suivant l'une quelconque des revendications précédentes, **caractérisé en ce que** la molécule sonde (S) est choisie parmi des hydrocarbures, des suies, des composés organiques volatiles, en particulier l'isopropanol, du monoxyde de carbone, du dioxyde de carbone, des acides carboxyliques, des alcanes, des alcynes, des alcènes, des alcools, des composés aromatiques, des thiols, des esters, des cétones, des aldéhydes, des amides, des amines, du N-propylamine, notamment l'isopropylamine, de l'ammoniaque, de la lutidine, de la pyridine, de l'hydrogène, du fluor, du néon, du nitrile, de la quinoléine, et un mélange d'au moins certains d'entre eux.

11. Procédé suivant l'une quelconque des revendications précédentes, **caractérisé en ce que** le mélange gazeux (G) contient également un gaz vecteur (V) choisi parmi l'air, l'azote, l'oxygène, l'argon, l'hélium et un mélange d'au moins certains de ceux-ci.

12. installation de caractérisation de surface de matériaux solides, comprenant :
- au moins un puits de percolation gazeuse (4) adapté pour recevoir un matériau à caractériser (M) sous forme pulvérulente,
- pour chaque puits de percolation gazeuse, une arrivée (18) d'un mélange gazeux (G) contenant une molécule sonde (S) susceptible d'interagir avec le matériau, cette arrivée débouchant dans le fond du puits de percolation gazeuse, et
- des moyens (12) de mesure d'un flux thermique radiatif (F) émis par le matériau (M), ces moyens étant adaptés pour observer le débouché du ou des puits de percolation gazeuse (4) sur l'extérieur.

13. Installation suivant la revendication 12, **caractérisée par** plusieurs puits de percolation gazeuse (4) distincts et agencés de manière adjacente pour être tous observés par les moyens de mesure (12).

14. Installation suivant l'une des revendications 12 ou 13, **caractérisée en ce qu'**elle comprend un bloc thermostaté (2) dans lequel sont délimités le ou les puits de percolation gazeuse (4).

15. Installation suivant l'une quelconque des revendications 12 à 14, **caractérisée en ce qu'**elle comprend, pour chaque puits de percolation gazeuse (4), un élément fritté (8) qui repose sur le fond du puits de percolation gazeuse, en travers de l'arrivée (18) du mélange gazeux (G), et qui est adapté pour supporter le matériau à caractériser (M).

## Patentansprüche

1. Verfahren zur Oberflächencharakterisierung fester Materialien, bei dem:
- einerseits ein zu charakterisierendes Material (M) in Pulverform und andererseits eine Gasmischung (G), die ein Sondenmolekül (S), das geeignet ist, mit dem Material zu interagieren, bereitgestellt wird,
- eine Gasperkolation des Materials (M) realisiert wird, wobei die freien Räume zwischen den Materialkörnern von der Gasmischung (G) durchströmt werden, wobei diese Körner in Kontakt miteinander gelassen werden,
- während diese Gasperkolation durch das Material (M) hindurch realisiert wird, der von dem Material abgegebene Strahlungswärmefluss (F) gemessen wird, und
- aus den den Strahlungswärmefluss (F) betreffenden Messungen mindestens eine das Material (M) betreffende Oberflächeneigenschaft hergeleitet wird.

2. Verfahren nach Anspruch 1, **dadurch gekennzeichnet, dass** der Strahlungswärmefluss (F) durch Infrarotthermografie gemessen wird.

3. Verfahren nach einem der Ansprüche 1 oder 2, **dadurch gekennzeichnet, dass** die Temperatur des Materials (M) während der Strömung der Gasmischung (G) durch das Material (M) hindurch geregelt wird.

4. Verfahren nach Anspruch 3, **dadurch gekennzeichnet, dass** während der Strömung der Gasmischung (G) durch das Material (M) hindurch sei es die Temperatur des Materials auf einen voreingestellten Wert festgehalten wird, sei es der Wert der Temperatur des Materials, insbesondere in linearer Weise über die Zeit, variiert wird.

5. Verfahren nach einem beliebigen der vorhergehenden Ansprüche, **dadurch gekennzeichnet, dass** zum Herleiten der das Material (M) betreffenden Oberflächeneigenschaft(en) die den Strahlungswärmefluss (F) des Materials (M), durch das die Gasmischung (G) hindurchströmt, betreffenden Messungen mit Referenzmessungen verglichen werden, die durch Messung eines Strahlungswärmeflusses erhalten werden, der von dem gleichen Material abgegeben wird, ohne dass dieses von der Gasmischung durchströmt wird.

6. Verfahren nach einem beliebigen der vorhergehenden Ansprüche, **dadurch gekennzeichnet, dass** das zu charakterisierende Material (M) ausgewählt ist aus Aluminiumoxid, Siliziumoxid, Zeolit, Aluminosilikatmaterialien, Oxiden von seltener Erde, insbesondere Zeriumoxiden, Lanthan, Praseodym und/oder Zirkonium, einem der vorerwähnten Materialien beladen mit mindestens einem Edelmetall, insbesondere mit Gold, Platin und/oder Palladium, Polymeren, insbesondere Polyaminen, Polyphosphazenen und Phosphorderivaten, organischen Molekülen und einer Mischung aus mindestens einigen derselben.

7. Verfahren nach einem beliebigen der vorhergehenden Ansprüche, **dadurch gekennzeichnet, dass** als Paar Material (M)/Sondenmolekül (S) ein Paar Adsorbens/Adsorbat gewählt wird, wobei die hergeleitete Oberflächeneigenschaft insbesondere der Fähigkeit des Materials (M), physikalisch das Sondenmolekül (S) zu adsorbieren, oder einem das Material (M) betreffenden spezifischen Oberflächenwert entspricht.

8. Verfahren nach einem beliebigen der Ansprüche 1 bis 6, **dadurch gekennzeichnet, dass** als Paar Material (M)/Sondenmolekül (S) ein Paar Oxidationsmittel/Reduktionsmittel gewählt wird, wobei die hergeleitete Oberflächeneigenschaft insbesondere aus einem Wärmeprofil (C6.1 bis C6.4) der Reduzierbarkeit des Materials (M) besteht.

9. Verfahren nach einem beliebigen der Ansprüche 1 bis 6, **dadurch gekennzeichnet, dass** als Paar Material (M)/Sondenmolekül (S) ein Paar Säure/Base oder ein Paar Base/Säure gewählt wird.

10. Verfahren nach einem beliebigen der vorhergehenden Ansprüche, **dadurch gekennzeichnet, dass** das Sondenmolekül (S) ausgewählt ist aus Kohlenwasserstoffen, Rußen, flüchtigen organischen Verbindungen, insbesondere Isopropanol, Kohlenstoffmonoxid, Kohlenstoffdioxid, Carboxylsäuren, Alkanen, Alkynen, Olefinen, Alkoholen, aromatischen Verbindungen, Thiolen, Estern, Ketonen, Aldehyden, Amiden, Aminen, N-Propylamin, insbesondere Isopropylamin, Ammoniak, Lutidin, Pyridin, Wasserstoff, Fluor, Neon, Nitril, Chinolin und einer Mischung mindestens von einigen von ihnen.

11. Verfahren nach einem beliebigen der vorhergehenden Ansprüche, **dadurch gekennzeichnet, dass** die Gasmischung (G) auch ein Trägergas (V), ausgewählt aus Luft, Stickstoff, Sauerstoff, Argon, Helium und einer Mischung mindestens von einigen von ihnen enthält.

12. Einrichtung zur Oberflächencharakterisierung von festen Materialien, umfassend:
- mindestens einen Gasperkolationsschacht (4), der ausgebildet ist, ein zu charakterisierendes Material (M) in Pulverform aufzunehmen,
- für jeden Gasperkolationsschacht einen Zufluss (18) einer Gasmischung (G), die ein Sondenmolekül (S) enthält, das geeignet ist, mit dem Material zu interagieren, wobei der Zufluss in den Boden des Gasperkolationsschachtes mündet, und
- Mittel (12) zur Messung eines Strahlungswärmeflusses (F), der von dem Material (M) abgegeben wird, wobei diese Mittel geeignet sind, den Auslass des oder der Gasperkolationsschachte (4) nach außen zu beobachten.

13. Einrichtung nach Anspruch 12, **gekennzeichnet durch** mehrere getrennte Gasperkolationsschächte (4), die benachbart zueinander angeordnet sind, damit sie alle **durch** die Messmittel (12) beobachtet werden können.

14. Einrichtung nach einem der Ansprüche 12 oder 13, **dadurch gekennzeichnet, dass** sie einen thermostatisierten Block (2) umfasst, in dem der oder die Gasperkolationsschächte (4) eingegrenzt sind.

15. Einrichtung nach einem beliebigen der Ansprüche 12 bis 14, **dadurch gekennzeichnet, dass** sie für jeden Gasperkolationsschacht (4) ein Sinterelement (8) umfasst, das auf dem Boden des Gasperkolationsschachtes quer zum Zufluss (18) der Gasmischung (G) ruht, und das geeignet ist, das zu charakterisierende Material (M) zu lagern.

## Claims

1. Method for characterizing the surface of solid materials, comprising the following steps:
- obtaining a material (M) to be **characterized, in** powder form, and a gas mixture (G) containing a probe molecule (S) that can interact with the material,
- performing gas percolation through the material (M) by flowing the gas mixture (G) into the free spaces between the grains of the material, while leaving said grains in contact with each other,
- during the gas percolation through the material (M), measuring a radiative heat flux (F) emitted by the material, and
- at least one surface characteristic relating to the material (M) is deduced from the radiative heat flux (F) measurements.

2. Method according to claim 1, **characterized in that** the radiative heat flux (F) is measured by infrared thermography.

3. Method according to any of claims 1 or 2, **characterized in that** the temperature of the material (M) is regulated during the flow of the gas mixture (G) through the material (M).

4. Method according to claim 3, **characterized in that**, during the flow of the gas mixture (G) through the material (M), either the temperature of said material is set to a preset value, or the temperature value of the material is varied, particularly in a linear fashion over time.

5. Method according to any of the above claims, **characterized in that**, to deduce the surface characteristic(s) relating to the material (M), the measurements relating to the radiative heat flux (F) of the material (M) through which the gas mixture (G) flows are compared to reference measurements obtained by measuring a radiative heat flux emitted by the same material which is not subject to a gas mixture flow.

6. Method according to any of the above claims, **characterized in that** the material (M) to be characterized is selected from alumina, silica, zeolite, aluminosilicate minerals, rare earth oxides, particularly cerium, lanthanum, praesodymium and/or zirconium oxides, any of the above-mentioned materials charged with at least one noble metal, particularly gold, platinum and/or palladium, polymers, particularly polyamines, polyphosphozenes and phosphorous derivatives, organic molecules, and a mixture of at least some thereof.

7. Method according to any of the above claims, **characterized in that** an adsorbent/adsorbate pairing is selected as the material (M)/probe molecule (S) pairing, the surface characteristic deduced particularly consisting of the ability of the material (M) to physically adsorb the probe molecule (S) or of a specific surface area value relating to the material (M).

8. Method according to any of claims 1 to 6, **characterized in that** an oxidant/reduction agent pairing is selected as the material (M)/probe molecule (S) pairing, the surface characteristic deduced particularly consisting of a thermal profile (C6.1 to C6.4) of the reducibility of the material (M).

9. Method according to any of claims 1 to 6, **characterized in that** an acid/base pairing or a base/acid pairing is selected as the material (M)/probe molecule (S) pairing.

10. Method according to any of the above claims, **characterized in that** the probe molecule (S) is selected from hydrocarbons, fly ash, volatile organic compounds, particularly isopropanol, carbon monoxide, carbon dioxide, carboxylic acids, alkanes, alkynes, alkenes, alcohols, aromatic compounds, thiols, esters, ketones, aldehydes, amides, amines, N-propylamine, particularly isopropylamine, ammonia, lutidine, pyridine, hydrogen, fluorine, neon, nitrile, quinoline, and a mixture of at least some thereof.

11. Method according to any of the above claims, **characterized in that** the gas mixture (G) also contains a carrier gas (V) selected from air, nitrogen, oxygen, argon, helium and a mixture of at least some thereof.

12. Equipment for characterizing the surface of solid materials, comprising:
- at least one gas percolation well (4) suitable for receiving a material (M) to be **characterized in** powder form,
- for each gas percolation well, an inlet (18) of a gas mixture (G) containing a probe molecule (S) suitable for interacting with the material, said inlet opening into the base of the gas percolation well, and
- means (12) for measuring a radiative heat flux (F) emitted by the material (M), said means being suitable for observing the opening of the gas percolation well(s) (4) to the outside.

13. Equipment according to claim 12, **characterized by** a plurality of separate gas percolation wells (4) arranged adjacently so as to be all observed by the measurement means (12).

14. Equipment according to any of claims 12 or 13, **characterized in that** it comprises a thermostatically-controlled block (2) wherein the gas percolation well(s) (4) is/are defined.

15. Equipment according to any of claims 12 to 14, **characterized in that** it comprises, for each gas percolation well (4), a sintered member (8) resting on the base of the gas percolation well, through the inlet (18) of gas mixture (G), and which is suitable for supporting the material (M) to be characterized.
